# EUROPÄISCHE PATENTSCHRIFT

(11) **EP 4 110 647 B1**
(45) Veröffentlichungstag und Bekanntmachung des Hinweises auf die Patenterteilung: **24.04.2024**
(21) Anmeldenummer: 21714617.4
(22) Anmeldetag: 25.02.2021
(51) Int. Cl.: B60L 53/30, B60L 53/68, G01R 22/06, G07F 15/00, G06Q 20/14, G06Q 20/18, G06Q 20/20, G06Q 20/32, G06Q 20/38, G06Q 20/40, G07F 9/00

(54) **LADEANSCHLUSSVORRICHTUNG UND LADESYSTEM FÜR ELEKTROFAHRZEUGE**
CHARGING CONNECTION DEVICE AND CHARGING SYSTEM FOR ELECTRIC VEHICLES
DISPOSITIF DE BORNE DE CHARGE ET SYSTÈME DE CHARGE POUR VÉHICULES ÉLECTRIQUES

(30) Priorität: 26.02.2020 DE 102020104967
(43) Veröffentlichungstag der Anmeldung: 04.01.2023
(73) Patentinhaber: KEBA Energy Automation GmbH, 4040 Linz (AT)
(72) Erfinder: FISCHER, Harald, 5323 Ebenau (AT); WEIDINGER, Gerhard, 4614 Marchtrenk (AT)
(74) Vertreter: Burger, Hannes
(86) Internationale Anmeldenummer: PCT/AT2021/060062
(87) Internationale Veröffentlichungsnummer: WO 2021/168495

(56) Entgegenhaltungen:
- EP-A1- 3 521 102
- EP-B1- 2 445 746
- DE-A1-102017 100 523
- PROKIN MILAN ET AL: "Optimal Control of Chargers for Electric Vehicles", 2019 8TH MEDITERRANEAN CONFERENCE ON EMBEDDED COMPUTING (MECO), IEEE, 10. Juni 2019 (2019-06-10), Seiten 1-4, XP033576939, DOI: 10.1109/MECO.2019.8760161 ISBN: 978-1-7281-1739-3 [gefunden am 2019-07-10]

## Beschreibung

Die Erfindung betrifft ein Verfahren zum Betreiben einer Ladeanschlussvorrichtung für Elektrofahrzeuge in Kombination mit einer Energiemessvorrichtung, wie es in den Ansprüchen angegeben ist. Zudem ist ein Ladesystem für Elektrofahrzeuge angegeben, welches solche Ladeanschlussvorrichtungen aufweist.

Es ist allgemein bekannt, dass zum Aufladen bzw. Regenerieren des Energiespeichers eines elektrisch betriebenen Fahrzeuges ein solches Fahrzeug für eine gewisse Zeit abgestellt und mit einer elektrischen Energiequelle, üblicherweise dem örtlich vorhandenen Stromnetz, elektrisch verbunden wird. Moderne elektrische Fahrzeuge haben dabei mittlerweile eine akzeptable Reichweite von mehreren 100km, die mit einem voll aufgeladenen Energiespeicher zurückgelegt werden können, und weiters eine entsprechend hohe Antriebsleistung in der Größenordnung von 100kW oder mehr, was eine komfortable und rasche Fortbewegung ermöglicht.

Mit zunehmender Verbreitung von Elektrofahrzeugen besteht auch der Wunsch bzw. das Erfordernis einer öffentlich verfügbaren bzw. allgemein zugänglichen Ladeinfrastruktur. In diesem Zusammenhang wird es zunehmend auch erforderlich sein, die von Energieversorgungsunternehmen bzw. Netzbetreibern bereitgestellte elektrische Energie unter anderem in Abhängigkeit des jeweiligen Verbrauchs in Rechnung zu stellen. Diesen Anforderungen entsprechende Ladeanschlussvorrichtungen können darüber hinaus Mittel zur Autorisierung bzw. Freigabe des Energiebezugs beinhalten, beispielsweise via einen kodierten RFID-Transponder oder via einen Schlüsselschalter, oder technische Identifikationsmittel umfassen, um den Benutzer zu identifizieren bzw. um Informationen für Verrechnungszwecke zu erfassen und gegebenenfalls diese Daten über datentechnische Netzwerkverbindungen mit zentralen Clearing-Stellen auszutauschen. Weiters können solche Ladeanschlussvorrichtungen auch Mittel zur Messung und Überwachung der übertragenen Leistung, des Stromes, oder der Energiemenge beinhalten. Vor allem dann, wenn der Bezug der elektrischen Energie einer Abrechnung unterliegt, ist es besonders wichtig, dass diese Abrechnung stets korrekt und den tatsächlichen Gegebenheiten entsprechend ausgeführt werden kann. Dabei sollen trotz umfangreicher Funktionalitäten der Ladeanschlussvorrichtung die Herstellungskosten möglichst gering gehalten werden, um eine Etablierung der Ladeanschlussvorrichtung bzw. einen Ausbau von öffentlich bzw. allgemein nutzbarer Ladeinfrastruktur zu begünstigen. Dies ist mit den bisher bekannten Systemen nur bedingt zufriedenstellend erzielbar.

Bekannt sind einerseits allgemein erhältliche Stromzähler, fallweise auch als Energiemessgeräte oder Leistungsmessgeräte bezeichnet, welche vorgefertigte Module darstellen und typischerweise für eine Montage auf standardisierten, sogenannten Hutschienen vorgesehen sind. Im Haushaltsbereich sind Stromzähler auch als SmartMeter bekannt. Alle diese Geräte haben die Gemeinsamkeit, dass Sie keine Möglichkeit für die Bereitstellung eines temporären Zählwerts haben, sondern nur einen Summenzählwert ausgeben können, welcher sich über die Verwendungsdauer des Stromzählers laufend erhöht. Solche aus dem Stand der Technik bekannten Stromzähler werden auch in Ladestationen verwendet, wobei solche Standard-Stromzähler immer nur den letzten Summenzählwert einer externen Einheit zur Verfügung stellen können. Aus diesem Grund sieht die Schrift EP2445746B1 folgenden Ladevorgang vor: Zu Beginn des Ladevorganges wird ein Datenpaket, welches den aktuellen Summenzählwert des Stromzählers umfasst, von der Ladestation zu einer Abrechnungszentrale gesendet. Mit dem Summenzählwert sind auch noch andere Merkmale verknüpft, wie eine Kennung des Fahrzeugs oder des Benutzers, Uhrzeit, Datum, etc. Dieses Datenpaket wird zusätzlich signiert. Zum Ende des Ladevorganges wird wiederum ein Datenpaket von der Ladestation zur Abrechnungszentrale gesendet, welches Datenpaket den aktuellen Summenzählwert des Stromzählers umfasst, wobei mit diesem Wert auch noch andere Merkmale verknüpft werden, wie Kennung des Fahrzeugs oder Benutzers, Uhrzeit, Datum, etc. Dieses Datenpaket wird ebenso zusätzlich signiert. Anschließend wird in der Abrechnungszentrale der Differenzwert aus den beiden Summenzählerwerten gebildet. Dieser Differenzwert bildet die Basis für die Energiekosten, welche dann dem Benutzer bzw. Kunden verrechnet werden. Die größte Problematik bei dieser Lösung ist, dass die Ladestation nur funktionieren kann, wenn diese Online ist und mit einer Abrechnungszentrale kommunizieren kann. Wenn also die Ladestation keine Datenverbindung zur Abrechnungszentrale hat, kann die Ladung nicht gestartet werden. Außerdem kann es vorkommen, dass zu Beginn der Ladesitzung eine Datenverbindung zur Abrechnungszentrale besteht, diese während des Ladevorgangs aber verloren geht. In einem solchen Fall kann die Energiemenge entweder nicht verrechnet werden, oder der Ladevorgang kann so lange nicht abgeschlossen werden, bis wieder eine Datenverbindung vorliegt. Insbesondere bestehen hierbei hohe Anforderungen an das Datennetzwerk bzw. an dessen Verfügbarkeit.

DE102017100523A beschreibt ein Betriebsverfahren für eine Ladestation, welche zum Bereitstellen elektrischer Energie für elektrisch betreibbare Fahrzeug vorgesehen ist. Diese Ladestation ist ausgestattet mit einem Rechenmodul, mit einem geeichten Energiezähler, welcher eine Anzeigeeinrichtung für eine über den Energiezähler in der Vergangenheit insgesamt zur Verfügung gestellte Gesamtenergiemenge aufweist. Mittels der Anzeigeeinrichtung in der Ladestation kann ein Nutzer der Ladestation die angezeigte Gesamtenergiemenge ablesen. Ein Kommunikationsmodul der Ladestation umfasst ein zur Anzeige von Daten ausgebildetes Display, wobei während des Ladevorgangs mittels des Energiezählers eine über die Ladestation bereitgestellte Energiemenge erfasst wird und zur Weiterverarbeitung an das Rechenmodul übertragen und/oder gespeichert wird. Es wird eine Quittung über einen erfolgten Ladevorgang erzeugt, wobei eine dem Grafik- und/oder Textabbild dieser Quittung zugeordnete Datei mit einem geheimen Signaturschlüssel derart verknüpft wird, dass als Resultat der Verknüpfung ein Signaturwert bereitgestellt wird. Das Grafik- und/oder Textabbild der Quittung und der Signaturwert werden dann auf dem Display angezeigt.

Ferner offenbart EP3521102A1 ein Verfahren zur Überprüfung eines von einem Energiezähler einer Ladestation für ein elektrisch angetriebenes Kraftfahrzeug bereitgestel lten Zählerstandes, wobei ein Startzählerstand der Ladestation zu Beginn und ein Endzählerstand nach Abschluss eines Ladevorgangs des elektrisch angetriebenen Kraftfahrzeugs erfasst wird. Dabei wird ein Datenpaket mit einem Datenblock erstellt, der eine den Startzählerstand und/oder den Endzählerstand des Ladevorgangs repräsentierende Information aufweist, oder es wird ein Datenpaket erstellt, welches sowohl einen Datenblock mit einer den Startzählerstand und/oder den Endzählerstand des Ladevorgangs repräsentierende Information als auch eine Anzahl an weiteren Datenblöcken aufweist, die jeweils eine den Startzählerstand und/oder den Endzählerstand zumindest eines zeitlich vorangehenden und/ oder zumindest eines zeitlich nachfolgenden Ladevorgangs repräsentierende Information aufweist. Das Datenpaket wird an eine Überprüfungseinheit übermittelt und/oder dort hinterlegt, wobei die den Startzählerstand und/oder den Endzählerstand repräsentierende Information einer der Datenblöcke mit der den Startzählerstand und/oder den Endzählerstand repräsentierenden Information des oder eines nachfolgenden Datenblock verglichen wird, und/oder wobei die den Endzählerstand repräsentierende Information des in der Überprüfungseinheit hinterlegten Datenblocks des zeitlich letzten Ladevorgangs mit dem Zählerstand der Ladestation verglichen wird. Auf diese Weise soll auf einen Fehler oder auf eine Manipulation geschlossen werden können.

Aufgabe der vorliegenden Erfindung war es, die Nachteile des Standes der Technik zu überwinden und eine technische Lösung zur Verfügung zu stellen, mit welcher der Bezug von elektrischer Energie an einer allgemein zugänglichen Ladeanschlussvorrichtung für einen Betreiber und auch für Benutzer der Ladeanschlussvorrichtung möglichst exakt und somit mess- und eichrechtlich zertifizierbar erfassbar ist. Gleichwohl sollen die Kosten zur Schaffung und zum Betreiben eines derartigen Systems möglichst gering gehalten werden. Nicht zuletzt ist es eine Anforderung, eine möglichst hohe Verfügbarkeit des Aufladungsservice via solche für die Öffentlichkeit zugänglichen Ladeanschlussvorrichtungen zu erreichen.

Diese Aufgabe wird durch ein Verfahren zum Betreiben einer Ladeanschlussvorrichtung für Elektrofahrzeuge sowie durch ein Ladesystem gelöst, wie es in den Ansprüchen angegeben ist.

Das erfindungsgemäße Verfahren zum Betreiben einer Ladeanschlussvorrichtung für Elektrofahrzeuge, welche Ladeanschlussvorrichtung eine in die Ladeanschlussvorrichtung baulich integrierte Energiemessvorrichtung aufweist, und welche Energiemessvorrichtung zum Messen und Zählen, insbesondere zum Aufsummieren, der während Ladevorgängen von Elektrofahrzeugen bezogenen elektrischen Energie ausgebildet ist, umfasst zumindest folgende Schritte:
- Speichern eines letztgültigen Energiezähler-Endwertes der Energiemessvorrichtung in einer datentechnisch abgesicherten Energiedaten-Speichervorrichtung in der Ladeanschlussvorrichtung, insbesondere innerhalb der Energiemessvorrichtung, in einem Zeitfenster nach Abschluss eines Ladevorganges und vor Beginn eines weiteren, nachfolgenden Ladevorganges. Dadurch wird der letztgültige Zählerwert des Energiezählers, also der Zählerwert nach Abschluss eines erfolgten Ladevorganges, manipulationssicher gespeichert bzw. datentechnisch zuverlässig gesichert.
- Detektieren bzw. Erkennen eines beabsichtigten Ladevorgangs, d.h. einer von einem Benutzer geplanten Ladesitzung, zum Beziehen von elektrischer Energie an der Ladeanschlussvorrichtung. Von der jeweiligen Ladeanschlussvorrichtung wird somit voll- oder teilautomatisiert erkannt, ob zu einem beliebigen Zeitpunkt eine Anforderung für einen Bezug von elektrischer Energie besteht.

- Speichern eines Geschäftsfall-Datenpakets in der Ladeanschlussvorrichtung, umfassend zumindest eine der Informationen enthaltend eine Ladevorgang-Kennung, eine Benutzer-Identifikation, eine Fahrzeug-Identifikation, ein Datum, eine Uhrzeit, eine Ladeanschlussvorrichtung-Identifikation und eine Energiemessvorrichtung-Identifikation. Demnach werden alle jene Daten bzw. Informationen, welche für eine Zuordnung und Nachvollziehbarkeit eines geplanten Ladevorgang-Geschäftsfalls erforderlich sind, zumindest temporär direkt in der Ladeanschlussvorrichtung gespeichert.
- Ausführen des Ladevorganges und Messen und Zählen des Energiebezuges während des Ladevorganges mittels der Energiemessvorrichtung bis zu einem Ladevorgang-Endzeitpunkt. Demnach wird ein Bezug von elektrischer Energie von der Energiemessvorrichtung fortlaufend mitgemessen und solange aufsummiert, bis der Ladevorgang beendet ist bzw. vom Benutzer beendet wurde.
- Erfassen eines Energiezähler-Summenwertes der Energiemessvorrichtung zu dem Ladevorgang-Endzeitpunkt. Der am Ende des Ladevorgangs vorliegende Zählwert, also der Energiezähler-Summenwert, wird von der Ladeanschlussvorrichtung quasi persistiert, so dass er auch über einen nachfolgenden Ladevorgang hinweg bzw. über einen allfälligen, nachfolgenden Eigen-Energieverbrauch der elektrischen Komponenten der Ladeanschlussvorrichtung hinweg, unverändert vorhanden ist.
- Erstellen eines kombinierten Ladevorgang-Datenpakets enthaltend zumindest eine der Informationen aus dem genannten Geschäftsfall-Datenpaket entweder kombiniert mit dem Energiezähler-Endwert und dem Energiezähler-Summenwert, oder kombiniert mit dem Differenzwert aus dem Energiezähler-Summenwert und dem Energiezähler-Endwert. Demzufolge wird nach Abschluss des Ladevorganges ein Datenpaket generiert, welches unter anderem die genannten Energiezähler-Zählwerte oder den errechneten Differenzwert aus den genannten Energiezähler-Zählwerten umfasst. Die vorteilhafte Variante des Differenzwertes ermöglicht dabei eine Reduzierung des anfallenden Datenvolumens. Insbesondere erfolgt in diesem Verfahrensschritt direkt innerhalb der Ladeanschlussvorrichtung eine Zuordnung bzw. Verknüpfung der jeweiligen Energieverbrauchsdaten mit den jeweiligen Geschäftsfall-Daten, ohne dass hierfür eine externe Systembeteiligung erforderlich ist, insbesondere ohne Einbindung eines zentralen Verwaltungssystems.
- digitales, insbesondere datentechnisches, Signieren und Übermitteln zumindest dieses kombinierten Ladevorgang-Datenpakets nach Beendigung des Ladevorganges an ein zentrales Verwaltungssystem, insbesondere an eine Abrechnungszentrale. Die digitale Signatur ermöglicht dabei die Überprüfung und Feststellung der Integrität bzw. Unverfälschtheit des kombinierten Datenpakets in dem zentralen bzw. örtlich fernliegenden Verwaltungssystem, insbesondere in der Abrechnungszentrale. Allfällige betrügerische Manipulationen am Übertragungsweg bzw. auftretende Datenpaket-Verfälschungen im Zuge der Übertragung des Ladevorgang-Datenpakets können so zumindest auf Seiten des zentralen Verwaltungssystems erkannt und in weiterer Folge entsprechend berücksichtigt werden.

Demnach wird nicht zu Beginn und am Ende eines Ladevorganges jeweils ein Datenpaket an ein zentrales, mehrere Ladeanschlussvorrichtungen verwaltendes Verwaltungssystem geschickt, sondern erst am Ende bzw. nach Abschluss eines Ladevorganges zumindest ein kombiniertes, insbesondere ein kumuliertes Ladevorgang-Datenpaket mit den jeweils relevanten Informationen über Energiebezug und Geschäftsfall übermittelt. Der von der Ladeanschlussvorrichtung bzw. vom Verwaltungssystem hervorgerufene Datenverkehr kann dadurch gering gehalten, wodurch die Belastung von entsprechenden Datennetzwerken zur Fernübertragung von Energiebezugsdaten reduziert wird. Die in der Ladeanschlussvorrichtung integrierte, datentechnisch abgesicherte und vorzugsweise entsprechend zertifizierte Energiedaten-Speichervorrichtung bietet dabei ein hohes Maß an Manipulations- bzw. Datensicherheit. Ein weiterer besonderer Vorteil der erfindungsgemäßen Maßnahmen liegt darin, dass selbst dann, wenn die Ladeanschlussvorrichtung temporär keine Datenverbindung zum zentralen Verwaltungssystem hat bzw. eine solche vorübergehend nicht aufbauen kann, sofort mit dem Laden des Elektrofahrzeuges begonnen werden kann, weil der letztgültige Energiezähler-Endwert im manipulationsgeschützten, internen Speicher der Ladeanschlussvorrichtung abgelegt ist. Zudem können relevante Geschäftsfall-Informationen und weitere relevante Parameter unmittelbar vor Ort erfasst werden. Kommt nachfolgend wieder eine Datenverbindung zwischen der Ladeanschlussvorrichtung und dem zentralen Verwaltungssystem zustande, dann können das Ladevorgang-Datenpaket bzw. die jeweiligen Ladevorgang-Datenpakete an das zentrale Verwaltungssystem übertragen werden. Somit wird eine verbesserte zeitliche Verfügbarkeit eines Energiebezugs via die Ladeanschlussvorrichtung erzielt. Zudem können die Belastungen und Nutzungsdauern von Datennetzwerken zur Fernübertragung von Energiebezugsdaten reduziert werden und potentiell damit einhergehende Nutzungskosten gering gehalten werden.

Des Weiteren kann es zweckmäßig sein, wenn der Schritt des Übermittelns des Ladevorgang-Datenpakets an das zentrale Verwaltungssystem unmittelbar, insbesondere innerhalb von 5 Minuten, vorzugsweise innerhalb von einer Minute, besonders bevorzugt innerhalb weniger Sekunden nach Abschluss des Ladevorganges mittels einer aufrechten datentechnischen Kommunikationsverbindung vorgenommen wird. Hierfür ist die Ladeanschlussvorrichtung mit dem zentralen Verwaltungssystem datentechnisch verbunden, also "online". Abrechnungsinformation werden dadurch rasch verfügbar gemacht und somit auch unmittelbar, also zeitnah, kontrollierbar bzw. verwertbar gemacht.

Entsprechend einer Ausführungsform für eine optimierte Kontrollierbarkeit durch den Benutzer der Ladeanschlussvorrichtung kann vorgesehen sein, dass ein datentechnischer Rückkanal betreffend das jeweilige Ladevorgang-Datenpaket zu einem Endgerät des Benutzers implementiert ist, insbesondere eine Rückmeldung über den erfolgten Energiebezug beispielsweise auf ein Mobiltelefon (Smartphone) des Benutzers der Ladeanschlussvorrichtung ausgeführt wird. Vorzugsweise wird eine derartige Rückmeldung bzw. Rückbestätigung von Seiten des zentralen Verwaltungssystems generiert und abgesetzt, insbesondere via Kurznachricht oder E-Mail.

Ferner kann vorgesehen sein, dass das Ladevorgang-Datenpaket in der Ladeanschlussvorrichtung bei einer temporär fehlenden, datentechnischen Kommunikationsverbindung zum zentralen Verwaltungssystem (offline) zwischengespeichert wird. Beim Vorliegen einer datentechnischen Kommunikationsverbindung wird dann das Ladevorgang-Datenpaket gemeinsam mit weiteren Ladevorgang-Datenpaketen anderer Ladevorgänge an das zentrale Verwaltungssystem übermittelt. Demzufolge wird eine Zwischenspeicherung von Energiebezugsdaten, welche den jeweiligen Geschäftsfällen zugeordnet sind, in der Ladeanschlussvorrichtung durchgeführt. Dadurch ist ein länger andauernder Offline-Betrieb der Ladeanschlussvorrichtung möglich und kann dadurch dessen zeitliche Verfügbarkeit gesteigert werden.

Erfindungsgemäß ist des weiteren vorgesehen, dass ein kombiniertes Ladevorgang-Datenpaket derart erstellt wird, dass mehrere Ladevorgang-Datenpakete von mehreren Ladevorgängen zu einem kumulierten Ladevorgang-Datenpaket zusammengeführt werden. Dieses kumulierte Ladevorgang-Datenpaket wird dann vorzugsweise unter Anwendung einer Hashfunktion signiert und derart an das zentrale Verwaltungssystem, insbesondere an die Abrechnungszentrale übermittelt. Dadurch kann die benötigte Rechenleistung auf Seiten der Ladeanschlussvorrichtung gering gehalten werden. Vor allem aber kann dadurch der erforderliche Speicherplatz auf Seiten des zentralen Verwaltungssystems gering gehalten werden. Dies ist vor allem dann ein bedeutsamer Faktor, wenn beim zentralen Verwaltungssystem, insbesondere in der Abrechnungszentrale, datenschutzrechtlich zertifizierte Speichervorrichtungen bzw. hinsichtlich Informationssicherheit zertifizierte Systeme vorgeschrieben sind. In einem solchen Fall kann beim zentralen Verwaltungssystem eine Speichervorrichtung nicht einfach nur ausgetauscht oder ergänzt werden, sondern ist eine Veränderung an der Speichervorrichtung in der Regel mit einer Neuzertifizierung verbunden. Durch die anspruchsgemäßen Maßnahmen können solche Aufwände hintan gehalten werden und kann so zu einem möglichst wirtschaftlichen bzw. kostengünstigen Betrieb der Ladeanschlussvorrichtung bzw. der gesamten Ladeinfrastruktur beigetragen werden.

Darüber hinaus kann eine kumulierte Übermittlung mehrerer signierter Ladevorgang-Datenpakete von mehreren Ladevorgängen an das zentrale Verwaltungssystem vorgesehen sein. Dadurch wird von der Ladeanschlussvorrichtung bzw. von einer Ladeinfrastruktur mit einer Vielzahl von anspruchsgemäßen Ladeanschlussvorrichtungen in vorteilhafter Weise weniger Datenverkehr verursacht. Zudem kann dadurch ein vergleichsweise energiesparender Datentransfer erreicht werden und sind auch länger andauernde, datentechnische Offline-Phasen einer Ladeanschlussvorrichtung ermöglicht.

Vorteilhaft ist auch eine Ausprägung, gemäß welcher periodisch zu vorgegebenen Zeitpunkten, beispielsweise tagezeitenabhängig, und/oder auf Anforderung von Seiten des zentralen Verwaltungssystems eine kumulierte Übermittlung von Ladevorgang-Datenpaketen ausgeführt wird. Demzufolge muss die Ladeanschlussvorrichtung nicht ständig online sein, d.h. mit dem zentralen Verwaltungssystem nicht permanent datentechnisch verbunden sein. Dadurch kann der Energieverbrauch für den Betrieb der Ladeanschlussvorrichtung selbst verringert werden. Aber auch der für den Betrieb des zentralen Verwaltungssystems erforderliche Energieverbrauch kann dadurch gesenkt werden.

Gemäß einer Weiterbildung ist vorgesehen, dass signierte Ladevorgang-Datenpakete ausgehend von der Ladeanschlussvorrichtung direkt an das zentrale Verwaltungssystem übermittelt werden. Dadurch kann das Risiko von unbefugten Manipulationen der Ladevorgang-Datenpakete deutlich verringert werden, insbesondere im Vergleich zu einer Übertragung der Ladevorgang-Datenpakete an das Elektrofahrzeug oder an den Benutzer der Ladeanschlussvorrichtung und einer anschließenden Weiterleitung an das zentrale Verwaltungssystem.

Ferner kann es zweckmäßig sein, wenn von der Ladeanschlussvorrichtung eineindeutige, d.h. unverwechselbare, Ladevorgang-Kennungen je Ladevorgang generiert werden. Insbesondere ist hierfür ein Code- bzw. ID-Generator zum Generieren einer Zufallszahl mit hoher Eineindeutigkeit in der Ladeanschlussvorrichtung implementiert. Dadurch kann die datentechnische Offline-Fähigkeit der Ladeanschlussvorrichtung weiter verbessert werden.

Gemäß einer besonderen Ausprägung kann vorgesehen sein, dass die Ladeanschlussvorrichtung zum Empfangen und Hinterlegen, insbesondere zum manipulationssicheren Speichern, eines jeweils aktuellen Energietarifes oder einer tageszeitbezogenen Energietarif-Tabelle, welcher bzw. welche vom zentralen Verwaltungssystem übermittelt wird, eingerichtet ist. Dadurch kann eine tarifabhängige Verrechnung von Energiebezügen selbst dann gewährleistet werden, wenn die Ladeanschlussvorrichtung längere Zeit datentechnisch offline ist. Insbesondere kann dadurch ein tageszeitabhängiger Tarifverlauf bzw. ein anderweitig variabler oder anderweitig angepasster Tarifverlauf angewandt werden, obwohl die Ladeanschlussvorrichtung nur temporär online ist.

Entsprechend einer vorteilhaften Weiterbildung kann vorgesehen sein, dass der aktuelle Energietarif oder die tageszeitbezogene Energietarif-Tabelle in der datentechnisch abgesicherten Energiedaten-Speichervorrichtung in der Ladeanschlussvorrichtung hinterlegt wird. Dadurch sind diese verrechnungsrelevanten Informationen vor Manipulationen sicher, insbesondere vor betrügerischen Veränderungen gut geschützt.

Des Weiteren kann innerhalb der Ladeanschlussvorrichtung, insbesondere von deren Steuervorrichtung oder Energiemessvorrichtung, eine Zuweisung von sich fortlaufend erhöhenden Energiezähler-Messwerten zu Zeitpunkten gemäß der Energietarif-Tabelle und eine Abspeicherung dieser Zuweisungen vorzugsweise in der Energiedaten-Speichervorrichtung in der Ladeanschlussvorrichtung vorgenommen werden. Dadurch ist eine tarifgerechte Zuordnung von zeitlich variierenden Energieverbrauchswerten auch dann gesichert möglich, wenn die Ladeanschlussvorrichtung zumindest temporär offline ist, d.h. vom zentralen Verwaltungssystem daten- bzw. kommunikationstechnisch isoliert ist. Ein besonderer Vorteil dieser Maßnahmen liegt auch darin, dass diese Zuordnungen bzw. datentechnischen Zuweisungen innerhalb der Ladeanschlussvorrichtung besonders rasch bzw. nahezu verzögerungsfrei ausgeführt werden können, wodurch eine exakte Ermittlung der Kosten des Energiebezugs gewährleistet wird. Insbesondere ist dadurch eine verzögerungsfreie bzw. besonders verzögerungsarme Zuordnung zwischen den jeweiligen Energiezähler-Messwerten und den jeweiligen Tarifphasen ermöglicht. Dies wäre unter Einbindung des zentralen, datentechnisch gekoppelten Verwaltungssystems unter anderem aufgrund der benötigten Übertragungszeiten nicht möglich bzw. nur bedingt erzielbar.

Ferner kann innerhalb der Ladeanschlussvorrichtung ein rechnerisches Multiplizieren von Energiezähler-Messwerten mit dem aktuellen Energietarif oder den tageszeitbezogenen Werten der Energietarif-Tabelle vorgenommen werden und daraufhin eine Übermittlung des Ladevorgang-Datenpakets mit dem wenigstens einen Multiplikationsprodukt an das zentrale Verwaltungssystem durchgeführt werden. Durch das rechnerische Multiplizieren in der Ladeanschlussvorrichtung kann die zu übertragende Datenmenge deutlich reduziert bzw. gering gehalten werden. Dies ist einerseits für die Übertragung eines möglichst geringen Datenvolumens vorteilhaft und andererseits für das Hosting der Datenpakete zweckmäßig, weil mit geringeren Speicherkapazitäten das Auslangen gefunden werden kann.

Entsprechend einer zweckmäßigen Ausgestaltung kann vorgesehen sein, dass Schreibzugriffe oder Schreibrechte gegenüber der Energiedaten-Speichervorrichtung exklusiv für die Energiemessvorrichtung festgelegt sind und Lesezugriffe oder Leserechte gegenüber der Energiedaten-Speichervorrichtung auch für eine Steuervorrichtung der Ladeanschlussvorrichtung und/oder für das zentrale Verwaltungssystem gegeben sind. Dadurch kann eine datentechnisch abgesicherte Energiedaten-Speichervorrichtung geschaffen werden, welche vor betrügerischen oder anderweitig illegalen Manipulationen verbessert geschützt ist. Ferner kann dadurch ein technisches Absicherungskriterium geschaffen werden, mit dem die Erlangung einer datenschutzrechtlichen Zertifizierung der Energiedaten-Speichervorrichtung unterstützt werden kann.

Entsprechend einer vorteilhaften Maßnahme kann auch vorgesehen sein, dass zumindest die Energiezähler-Summenwerte und/oder die Energiezähler-Endwerte als datentechnisch unsignierte Rohdaten in der Energiedaten-Speichervorrichtung abgespeichert werden. Die Energiedaten-Speichervorrichtung kann dadurch eine relativ geringe Speicherkapazität aufweisen, also ein möglichst kleines maximal speicherbares Datenvolumen besitzen. Die entsprechende Ladeanschlussvorrichtung bzw. die entsprechende Ladeinfrastruktur ist damit technisch einfacher und potentiell kostengünstiger implementierbar. Dies nicht zuletzt deshalb, weil so auch mit weniger leistungsfähigen Prozessoren zur Datenverarbeitung und Datenhinterlegung das Auslangen gefunden werden kann.

Gemäß einer Ausführungsform kann auch vorgesehen sein, dass der Schritt des Speicherns des letztgültigen Energiezähler-Endwertes bzw. Energiezähler-Summenwertes das Abspeichern von Null umfasst und von der Energiemessvorrichtung die während eines Ladevorganges von einem Elektrofahrzeug bezogene elektrische Energie ausgehend von Null gezählt und aufsummiert wird. Damit ist ein dezidierter Ladevorgang-Zähler geschaffen, welcher ausschließlich die je Ladevorgang jeweils in Anspruch genommene elektrische Energie misst und aufsummiert und welcher nach Abschluss des Ladevorganges wieder auf Null rückgesetzt werden kann. Ein solcher Ladevorgang-Zähler kann alternativ oder in Kombination mit einem sich fortlaufend aufsummierenden Energiezähler-Summenwert geführt werden.

Ein vorteilhaftes Ladesystem für Elektrofahrzeuge weist eine Mehrzahl von örtlich verteilt angeordneten Ladeanschlussvorrichtungen und ein mit diesen Ladeanschlussvorrichtungen datentechnisch verbundenes, zentrales Verwaltungssystem auf. Die Ladeanschlussvorrichtungen und das zentrale Verwaltungssystem sind dabei dazu eingerichtet sind, das hierin beschriebene Verfahren auszuführen. Hierfür werden die Ladeanschlussvorrichtungen und das zentrale Verwaltungssystem programmgesteuert ausgeführt und durch entsprechende Software betrieben.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform der Ladeanschlussvorrichtung in perspektivischer Ansicht auf die Gehäusevorderseite;
- Fig. 2: ein beispielhaftes Blockschaltbild zur Veranschaulichung von Komponenten und Funktionalitäten der Ladeanschlussvorrichtung;
- Fig. 3: ein beispielhaftes Ablaufschema für den Betrieb der Ladeanschlussvorrichtung;
- Fig. 4: ein Beispiel für eine in der Ladeanschlussvorrichtung hinterlegbare Energietarif-Tabelle.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

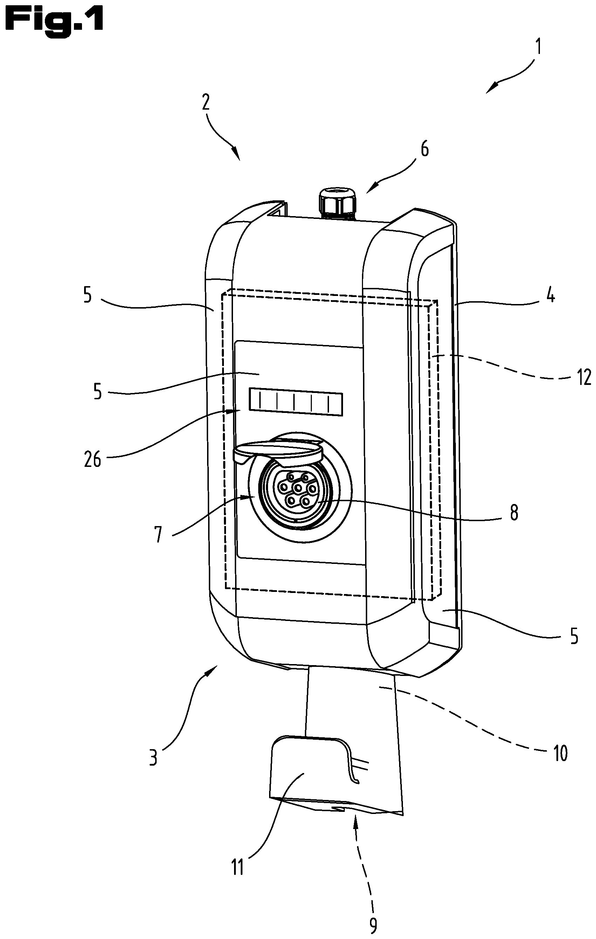

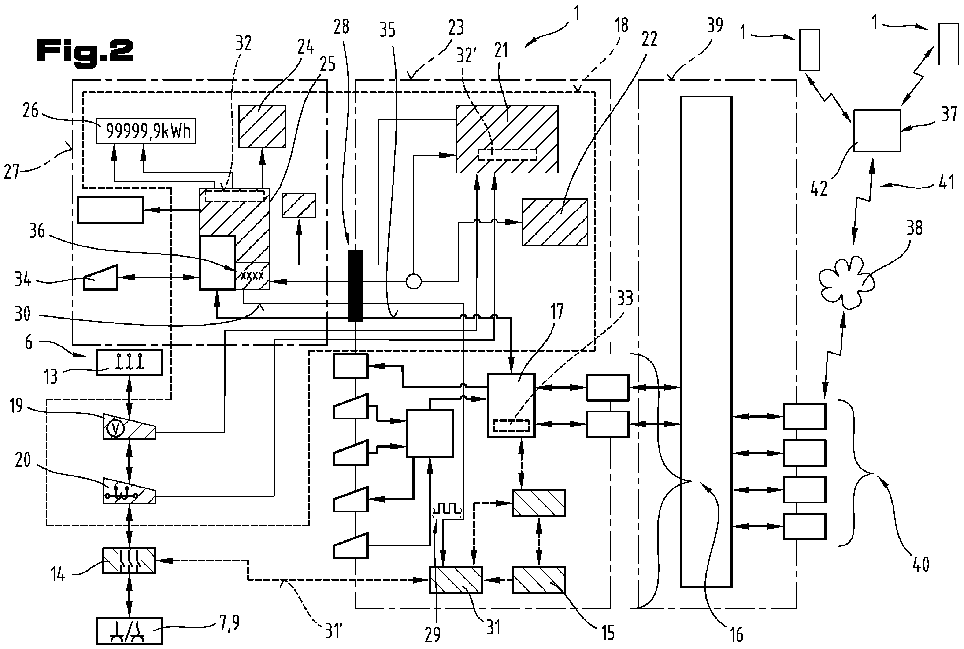

In den Fig. 1 und 2 ist eine beispielhafte Ausführungsform einer Ladeanschlussvorrichtung 1 für Elektrofahrzeuge veranschaulicht. Diese Ladeanschlussvorrichtung 1 ist zum Aufladen bzw. Regenerieren eines Energiespeichers, insbesondere einer oder mehrerer Batterien, eines Elektrofahrzeuges vorgesehen, wobei die Ladeanschlussvorrichtung 1 das Bindeglied zwischen einem ortsfesten Stromversorgungsnetz und einer Ladevorrichtung bzw. des Energiespeichers des Elektrofahrzeugs bildet. Die Ladevorrichtung des Energiespeichers kann dabei als Bestandteil der Ladeanschlussvorrichtung 1 ausgebildet sein. In den derzeit üblichen Ausführungsformen ist die Ladevorrichtung jedoch vorzugsweise im Elektrofahrzeug selbst eingebaut. Die Ladeanschlussvorrichtung 1 stellt dann eine Art intelligente Stromtankstelle für Elektrofahrzeuge dar.

Die gezeigte Ladeanschlussvorrichtung 1 umfasst ein Gehäuse 2, welches seinerseits aus einem vorderen Gehäuseteil 3 und einem hinteren Gehäuseteil 4 gebildet ist, wobei der hintere Gehäuseteil 4 ortsfest, beispielsweise an einer Hauswand oder einer Säule, montiert ist und der vordere Gehäuseteil 3 bedarfsweise von dem hinteren Gehäuseteil 4 abgenommen werden kann. Im vorliegenden Ausführungsbeispiel ist der vordere Gehäuseteil 3 aus mehreren, weiteren Gehäuseteilen 5 gebildet.

An einer Oberseite des Gehäuses 2 ist eine erste Schnittstelle 6 zur Entnahme von elektrischer Energie aus dem ortsfesten Stromversorgungsnetz angeordnet. Über diese erste Schnittstelle 6 bezieht die Ladeanschlussvorrichtung 1 die elektrische Energie aus dem Stromversorgungsnetz, wobei im vorliegenden Ausführungsbeispiel die erste Schnittstelle 6 als fix verdrahtete Leitungsschnittstelle ausgeführt ist. Um die typischerweise benötigte, elektrische Leistung in die Ladeanschlussvorrichtung 1 bzw. von dort weiter zum Elektrofahrzeug übertragen zu können, sind elektrische Kabel mit einem Leitungsquerschnitt von zumindest 4 mm2 vorgesehen.

Zur Abgabe der elektrischen Energie an das Elektrofahrzeug ist beispielsweise an einer Vorderseite des Gehäuses 2 zumindest eine zweite Schnittstelle 7 ausgebildet. Diese zumindest eine zweite Schnittstelle 7 umfasst eine Steckbuchse 8, in welche ein Stecker eines Ladekabels eines Elektrofahrzeugs eingeführt und verriegelt werden kann. Bei der dargestellten Ladeanschlussvorrichtung 1 ist an einer Unterseite des Gehäuses 2 eine weitere, zweite Schnittstelle 9 vorgesehen, an welcher ein fix mit der Ladeanschlussvorrichtung 1 verdrahtetes, flexibles Ladekabel angeschlossen sein kann, wobei am freien Ende des flexiblen Ladekabels ein Stecker ausgebildet ist, welcher in eine entsprechende Steckbuchse am Elektrofahrzeug eingesteckt werden kann. Ein entsprechender Ladekabelabgang 10 für das flexible Ladekabel der weiteren, zweiten Schnittstelle 9 ist hierbei an der Unterseite des Gehäuses 2 ersichtlich. Welche der Ausführungsformen der zweiten Schnittstelle 7, 9 nun tatsächlich an der Ladeanschlussvorrichtung 1 vorhanden ist und ob nur eine oder mehrere zweite Schnittstellen 7, 9 ausgebildet sind, kann nach Bedarf festgelegt werden. Bei einer Ausführung der zumindest einen, zweiten Schnittstelle 7, 9 als flexibles Ladekabel ist zweckmäßigerweise eine Ladekabelhalterung 11 vorgesehen, auf welcher das flexible Ladekabel bei Nichtgebrauch verstaut werden kann. Typischerweise sind die als Steckbuchse 8 ausgeführte zweite Schnittstelle 7 und die als Kabelabgang ausgeführte zweite Schnittstelle 9 als Alternativen an der Ladeanschlussvorrichtung 1 vorgesehen.

Das Gehäuse 2 der Ladeanschlussvorrichtung 1 umschließt eine Mehrzahl von elektrotechnischen bzw. elektronischen Komponenten, welche auf wenigstens einer Leiterplatte 12 angeordnet bzw. fixiert sein können und/oder anderweitig im Gehäuse gehaltert und verdrahtet sein können. Die elektrotechnischen bzw. elektronischen Komponenten steuern und/oder überwachen unter anderem den Ladevorgang des Elektrofahrzeuges und können weiters für die Gewährleistung der elektrotechnischen Sicherheit der Ladeanschlussvorrichtung vorgesehen sein. Im Zuge der Steuerung bzw. Überwachung des Ladevorgangs ist es ebenso nötig, verschiedene Messungen, beispielsweise zur Bestimmung der Stromstärke des an das Elektrofahrzeug übertragenen Stromes, vorzunehmen. Die dazu nötigen, elektrotechnischen bzw. elektronischen Komponenten können ebenso auf der wenigstens einen Leiterplatte 12 vorhanden sein.

In Fig. 2 ist ein schematisches Blockschaltbild in Zusammenhang mit beispielhaft angeführten elektrotechnischen bzw. elektronischen Komponenten der Ladeanschlussvorrichtung 1 gezeigt. Diese umfassen insbesondere Anschlussklemmen 13 zum Verbinden einer Kabelzuleitung mit der ersten Schnittstelle 6 der Ladeanschlussvorrichtung 1, eine Leistungsschaltvorrichtung 14, beispielsweise einen Schütz oder einen Leistungs-Halbleiterschalter zum Herstellen bzw. Trennen einer elektrischen Verbindung zwischen der ersten Schnittstelle 6 und der zweiten Schnittstelle 7 bzw. der weiteren zweiten Schnittstelle 9 der Ladeanschlussvorrichtung 1, gegebenenfalls eine Fehlerstrom-Überwachungsvorrichtung 15, welche bei einem Fehlerstrom bzw. Erdschluss im Stromversorgungsnetz von der Ladeanschlussvorrichtung 1 bis zum Elektrofahrzeug den Stromkreis unterbricht, und eine zentrale Steuervorrichtung 16, welche vorzugsweise einen ersten Mikrocontroller 17 umfasst, der einzelne elektrotechnische bzw. elektronische Komponenten steuert bzw. mit diesen kommuniziert.

Die Ladeanschlussvorrichtung 1 umfasst weiters eine rein elektrotechnisch implementierte Energiemessvorrichtung 18 zum Messen der über die Ladeanschlussvorrichtung 1 an ein Elektrofahrzeug abgegebenen elektrischen Energie. Eine solche rein elektrotechnische Energiemessvorrichtung 18 ist im Gegensatz zu einem elektromechanischen Energiezähler kompakt und leichtgewichtig.

Die Energiemessvorrichtung 18 umfasst zumindest einen Spannungsgeber 19 je elektrischer Phase bzw. je elektrischem Pfad zur Leistungsschaltvorrichtung 14 und zumindest einen Stromwandler 20 je elektrischer Phase bzw. je elektrischem Pfad zur Leistungsschaltvorrichtung 14. Der zumindest eine Spannungsgeber 19 und der zumindest eine Stromwandler 20 sind mit einem Mess-Controller 21 verbunden und übergeben so die jeweiligen Spannungs- bzw. Stromwerte an den Mess-Controller 21. Der Mess-Controller 21 errechnet aus den übergebenen Signalen bzw. Werten die jeweils übertragene bzw. bezogene, elektrische Energiemenge.

Eine nicht-flüchtige Kalibrierdaten-Speichervorrichtung 22, insbesondere ein EEPROM-Speicher, ist ebenso wie die Steuervorrichtung 16 auf einer Hauptplatine 23 angeordnet. In der Kalibrierdaten-Speichervorrichtung 22 sind die für eine genaue Messung durch die Energiemessvorrichtung 18 erforderlichen Kalibrierdaten hinterlegt. Diese Kalibrierdaten sind geräteabhängig und variieren vor allem in Abhängigkeit der elektrischen Eigenschaften der Spannungsgeber 19 und der Stromwandler 20 bzw. in Abhängigkeit der ohmschen Widerstände der Leitungsverbindungen.

Die Energiemessvorrichtung 18 umfasst weiters eine nicht-flüchtige Energiedaten-Speichervorrichtung 24. In dieser Energiedaten-Speichervorrichtung 24 sind zumindest die von Ladesitzung zu Ladesitzung kontinuierlich ansteigenden Werte des Gesamtenergiebezuges an der Ladeanschlussvorrichtung 1 hinterlegbar. Eine Ladesitzung kann auch als Ladevorgang bezeichnet werden.

Diese Energiedaten-Speichervorrichtung 24 ist mit einem eigenständigen Messdaten-Verwaltungscontroller 25 verbunden. Dieser Messdaten-Verwaltungscontroller 25 ist weiters mit einem Display 26 an der Ladeanschlussvorrichtung 1 verbunden. Insbesondere ist dieses Display 26 unmittelbar am Gehäuse 2 angeordnet und von einem Benutzer der Ladeanschlussvorrichtung 1 ablesbar. Dieses Display 26 ist zur Anzeige von mess- und eichrechtlich relevanten Daten in Form von Klartext vorgesehen. Insbesondere ist darauf der Gesamt-Energieverbrauch seit der ersten Inbetriebnahme der Energiemessvorrichtung 18 ablesbar und gegebenenfalls die während des Ladevorganges bezogene Energiemenge abgelesen werden. Alternativ oder in Kombination dazu kann am Display 26 die jeweilige Bezugsmenge von elektrischer Energie je Ladevorgang visualisiert und von einem Benutzer abgelesen werden. Zumindest die Energiedaten-Speichervorrichtung 24 und der Messdaten-Verwaltungscontroller 25 sind bevorzugt auf einer baulich eigenständigen Messplatine 27 angeordnet. Diese Messplatine 27 ist über eine Steckerschnittstelle 28 mit der Hauptplatine 23 elektrisch verbindbar. Vorzugsweise dient dabei die Hauptplatine 23 als Trägerplatine für die Messplatine 27.

Die Energiemessvorrichtung 18 ist dazu eingerichtet, einen Energiefluss bzw. eine Energiefreischaltung an der zweiten Schnittstelle 7 bzw. 9 zu unterbinden, wenn die Energiemessvorrichtung 18 nicht imstande ist, einen Energiebezug messtechnisch bzw. eichrechtlich exakt zu erfassen bzw. zu messen. Dies kann aufgrund von Boot-Vorgängen der Energiemessvorrichtung 18, insbesondere des Messdaten-Verwaltungscontrollers 25 auftreten. Aber auch anderweitige Beeinflussungen bzw. Störungen können dazu führen, dass eine exakte Erfassung, insbesondere eine zeitsynchrone Bereitstellung und Messung eines Energiebezuges nicht möglich ist. Für den Fall, dass die Energiemessvorrichtung 18 nicht adäquat mess- bzw. erfassungsbereit ist, kann die Energiemessvorrichtung 18 eine Aktivierung der Leistungsschaltvorrichtung 14 unterbinden und damit einen Stromfluss zu der Abgangsschnittstelle, insbesondere zur zweiten Schnittstelle 7 bzw. 9 aktiv vermeiden. Dabei hat die Energiemessvorrichtung 18 für den Fall einer einzuleitenden Unterbindung oder Verweigerung eines Energieflusses zu der wenigstens einen zweiten Schnittstelle 7 bzw. 9 steuerungstechnisch priorisierten Einfluss auf die Schaltzustände der Leistungsschaltvorrichtung 14. Insbesondere weist die Leistungsschaltvorrichtung 14 einen ersten Schaltzustand (Aktivzustand) auf, in welchem eine Bereitstellung bzw. Übertragung von elektrischer Energie an die zumindest eine zweite Schnittstelle 7 bzw. 9 ermöglicht ist. Demgegenüber ist in einem zweiten Schaltzustand (Inaktivzustand) eine Bereitstellung bzw. Übertragung von elektrischer Energie an die zumindest eine zweite Schnittstelle 7 bzw. 9 unterbindbar. Im einfachsten Fall sind die beiden Schaltstellungen durch den Aktiv- bzw. Inaktivzustand eines elektromechanischen Leistungsschalters, insbesondere eines Schaltschütz oder eines Leistungs-Halbleiterschalters, definiert. Für jene Fälle, in denen die Energiemessvorrichtung 18 nicht messbereit bzw. nicht erfassungsbereit ist, bewirkt die Energiemessvorrichtung 18 eine Herstellung oder eine Beibehaltung des zweiten Schaltzustandes, also des Inaktivzustandes der Leistungsschaltvorrichtung 14. Dadurch wird eine Energieübertragung ausgehend von der Energiemessvorrichtung 18 steuerungstechnisch bzw. automatisch unterbunden.

Dabei kann die Energiemessvorrichtung 18 zur Abgabe bzw. Bereitstellung eines steuerungstechnischen Freigabe- bzw. Sperrsignals 29 ausgebildet sein. Hierzu ist die Energiemessvorrichtung 18 mittels wenigstens einer Steuerleitung 30, insbesondere wenigstens einer Signal- bzw. Datenleitung, mit der Steuervorrichtung 16 bzw. mit deren Leistungsschalter-Ansteuereinheit 31 verbunden. Die Steuervorrichtung 16 bzw. deren Leistungsschalter-Ansteuereinheit 31 ist zur Auswertung des steuerungstechnischen Freigabe- und/oder Sperrsignals 29 und zur auswertungsabhängigen Ansteuerung der Leistungsschaltvorrichtung 14 ausgebildet. Die Steuervorrichtung 16 bzw. deren Leistungsschalter-Ansteuereinheit 31 ist dabei über wenigstens eine Steuerleitung 31 ` mit der Leistungsschaltvorrichtung 14 verbunden. Dadurch ist die Leistungsschaltvorrichtung 14 in Abhängigkeit der Auswertungsergebnisse des Freigabe- und/oder Sperrsignals 29 von der Steuervorrichtung 16 bzw. von der Leistungsschalter-Ansteuereinheit 31 fallspezifisch aktivier- und deaktivierbar.

Zweckmäßig ist es, wenn die Energiemessvorrichtung 18 zur Abgabe bzw. Bereitstellung eines Sperrsignals eingerichtet, wenn seitens der Energiemessvorrichtung 18 fehlende Bereitschaft zum Messen bzw. Erfassen eines Energieflusses zu der wenigstens einen zweiten Schnittstelle 7 bzw. 9 gegeben ist. Umgekehrt ist die Energiemessvorrichtung 18 zur Abgabe bzw. Bereitstellung eines Freigabesignals eingerichtet, wenn die Energiemessvorrichtung 18 funktionsbereit ist und einen Energiefluss zur zweiten Schnittstelle 7 mess- und eichrechtskonform messen bzw. erfassen kann.

Die steuerungstechnischen bzw. datentechnischen Auswertungen durch die Steuervorrichtung 16 bzw. durch die Leistungsschalter-Ansteuereinheit 31 können beispielsweise durch eine logische UND-Verknüpfung des Freigabe- bzw. Sperrsignals 29 der Energiemessvorrichtung 18 mit wenigstens einem Freigabekriterium oder einer Schaltanforderung von Seiten der Steuervorrichtung 16 umgesetzt sein. Solche Freigabekriterien von Seiten der Steuervorrichtung 16 können durch eine Erkennung eines ordnungsgemäß angeschlossenen, ladebereiten Fahrzeuges, durch eine Freigabe von Seiten der Fehlerstrom-Überwachungsvorrichtung 15 und/oder durch eine Freigabe von Seiten einer thermischen Überwachungsvorrichtung definiert sein.

Die Funktionseinheit Energiemessvorrichtung 18 der Ladeanschlussvorrichtung 1, insbesondere deren Mess- und Auswertungssoftware 32, 32', ist messtechnisch bzw. eichrechtlich zertifiziert. Insbesondere ist die Energiemessvorrichtung 18 konform zu nationalen und/oder internationalem Mess- und Eichvorschriften ausgebildet bzw. erfüllt sie die Anforderungen an länderspezifische Maß- und Eichgesetze. Demgegenüber ist eine funktionale Betriebssoftware 33, welche von der Steuervorrichtung 16 ausgeführt wird und die sonstigen Abläufe und Funktionen der Steuervorrichtung 16 bzw. der Ladeanschlussvorrichtung 1 bestimmt, nicht nach länderspezifischen Eich- und/oder Messvorschriften zertifiziert. Insbesondere ist die Betriebssoftware 33 der Ladeanschlussvorrichtung 1 vorzugsweise nicht nach länderspezifischen Gesetzen und/oder Richtlinien in Zusammenhang mit Mess- und/oder Eichgesetzen zertifiziert oder bewertet. Dadurch können umfassende Aufwendungen für derartige Bewertungen bzw. Zertifizierungen erübrigt werden. Nachdem die Betriebssoftware 33 nur funktionale Aspekte der Ladeanschlussvorrichtung 1, beispielsweise die Kommunikation mit dem Elektrofahrzeug oder eine Mensch-Maschine-Interaktion mit einem Benutzer der Ladeanschlussvorrichtung abdeckt, ist dies akzeptabel. Insbesondere wird dies durch eine Trennung von mess- und eichrechtlich relevanten Aspekten der Energiemessvorrichtung 18 von rein funktionalen bzw. betriebsablaufspezifischen Aspekten in Zusammenhang mit der Betriebssoftware 33 der Steuervorrichtung 16 vorteilhaft ermöglicht.

Die Ladeanschlussvorrichtung 1 umfasst weiters wenigstens eine Identifikationsvorrichtung 34 zur Identifizierung unterschiedlicher Benutzer der Ladeanschlussvorrichtung 1. Die Identifikationsvorrichtung 34 kann durch eine RFID-Lesevorrichtung, durch eine Pin-Tastatur, durch eine biometrische Erfassungsvorrichtung, oder dergleichen, gebildet sein. Die Energiemessvorrichtung 18 umfasst die oben genannte Energiedaten-Speichervorrichtung 24 bzw. hat die Energiemessvorrichtung 18 auf eine solche Energiedaten-Speichervorrichtung 24 Zugriff. In dieser Energiedaten-Speichervorrichtung 24 sind die jeweiligen Daten zu Ladevorgängen bzw. Energiebezügen der jeweiligen Benutzer hinterlegbar. Besonders zweckmäßig ist es dabei, wenn diese Daten betreffend Ladevorgänge der individuellen Benutzer von der Energiemessvorrichtung datentechnisch unsigniert in der Energiedaten-Speichervorrichtung 24 hinterlegbar sind bzw. hinterlegt werden. Dies erlaubt schnelle Verarbeitungs- bzw. Speicherzeiten bei relativ geringem Speicherbedarf. Vorteilhafterweise ist dabei die Energiedaten-Speichervorrichtung 24 in einem eichrechtlich relevanten Teilabschnitt der Energiemessvorrichtung 18 angeordnet. Insbesondere ist die Energiedaten-Speichervorrichtung 24 auf jener Platine angeordnet, auf welcher auch der Messdaten-Verwaltungscontroller 25 positioniert ist. Beispielsgemäß ist dies durch die gemeinsam genutzte Messplatine 27 realisiert.

Weiters ist es zweckmäßig, wenn die Energiemessvorrichtung 18 und die Steuervorrichtung 16 jeweils eigene bzw. separat zugeordnete Mikrocontroller mit jeweils eigener Firmware aufweisen. Beispielsgemäß weist die Energiemessvorrichtung 18 den Mess-Controller 21 auf, während die funktionale Steuervorrichtung 16 der Ladeanschlussvorrichtung 1 den eigenständigen Mikrocontroller 17 umfasst.

Die Energiemessvorrichtung 18 ist vorzugsweise über ein Bussystem 35, beispielsweise via CAN-Bus oder einen sonstigen seriellen Datenbus, mit der Steuervorrichtung 16 kommunikationsverbunden. Dabei ist vorgesehen, dass die Firmware der Steuervorrichtung 16 und die Firmware der Energiemessvorrichtung 18 auch ohne Datenverbindung zwischen der Steuervorrichtung 16 und der Energiemessvorrichtung 18 lauffähig sind. Dadurch wird ein möglichst rückwirkungsfreier, prinzipiell autarker Betrieb der jeweiligen Einheiten ermöglicht.

Eine überwiegend programmgesteuerte bzw. softwaretechnische Implementierung in der Ladeanschlussvorrichtung 1 sieht vor, dass die Steuervorrichtung 16 dazu eingerichtet ist, vor jedem Start eines Ladevorganges eine datentechnische Kennung 36 der Energiemessvorrichtung 18, beispielsweise eine eineindeutige Seriennummer, auszulesen und auf Gültigkeit zu überprüfen. Von der Steuervorrichtung 16 bzw. Energiemessvorrichtung 18 ist dabei ein Start eines Ladevorganges unterbindbar, wenn diese datentechnische Kennung 36 als ungültig erkannt wird oder unbekannt ist. Manipulationen bzw. unerlaubte Zuordnungen zwischen einer manipulierten Energiemessvorrichtung 18 und/oder einer manipulierten Steuervorrichtung 16 können dadurch erschwert bzw. hintangehalten werden.

Weiters kann eine datentechnische Vernetzung einer Mehrzahl von Ladeanschlussvorrichtungen 1 mit einem zentralen Verwaltungssystem 37 vorgesehen sein. Die datentechnische Kommunikation zwischen den jeweiligen Ladeanschlussvorrichtungen 1 und dem zentralen Verwaltungssystem 37, insbesondere einem sogenannten Backend-System, kann beispielsweise via das Internet 38 vorgesehen sein. Hierfür umfasst die Ladeanschlussvorrichtung 1 eine erweiterte Kommunikationsbaugruppe 39 mit wenigstens einer datentechnischen Kommunikationsschnittstelle 40 zur Fernkommunikation mit dem zentralen Verwaltungssystem 37.

Demzufolge kann zwischen der Ladeanschlussvorrichtung 1 bzw. einer Mehrzahl von örtlich verteilten Ladeanschlussvorrichtungen 1 und dem wenigstens einen zentralen Verwaltungsystem 37 wenigstens eine datentechnische Kommunikationsverbindung 41 aufgebaut werden. Bei einer aufrechten bzw. bestehenden Kommunikationsverbindung 41 kann auch davon gesprochen werden, dass die betreffende Ladeanschlussvorrichtung 1 online ist, also mit dem zentralen Verwaltungssystem 37 zwecks Übermittlung bzw. Austausch von Daten kommunikationsverbunden ist. Beim zentralen Verwaltungssystem 37 werden unter anderem Abrechnungen von Energiebezügen gegenüber dem jeweiligen Benutzer der Ladeanschlussvorrichtung 1 vorgenommen bzw. verwaltet. Dementsprechend erfüllt dann das zentrale Verwaltungssystem 37 die Funktion einer Abrechnungszentrale 42.

Die datentechnische Kommunikationsverbindung 41 kann mittels einer kabellosen Verbindung wie WLAN, UMTS, 4G, 5G, HSDPA etc. aufgebaut werden, oder aber mittels einer kabelbehafteten Verbindung wie LAN, CAN-BUS, etc. aufgebaut werden.

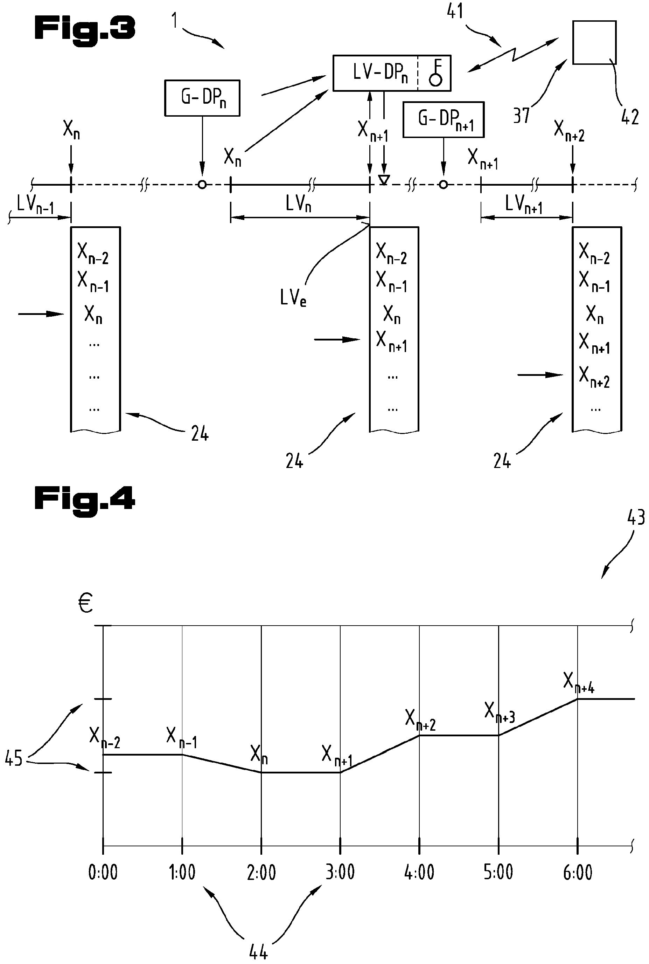

In Fig. 3 ist ein vorteilhaftes Verfahren zum Betreiben einer gattungsgemäßen Ladeanschlussvorrichtung 1 schematisch veranschaulicht. Dieses Betriebsverfahren wird überwiegend durch die in der Steuervorrichtung 16 implementierte, funktionale Betriebssoftware 33 und durch die in der Energiemessvorrichtung 18 implementierte, insbesondere von dessen am Mess-Controller 21 und/oder von dessen am Messdaten-Verwaltungscontroller 25 ausgeführten Mess- und Auswertungssoftware 32, 32' - Fig. 2 - bereitgestellt. Gewissen Miteinfluss hat hierbei aber auch eine am zentralen Verwaltungssystem 37 ausgeführte Verwaltungssoftware.

Dementsprechend wird ein jeweils letztgültiger Energiezähler-Endwert Xn der Energiemessvorrichtung 18 in der datentechnisch abgesicherten Energiedaten-Speichervorrichtung 24 direkt in der Ladeanschlussvorrichtung 1 gespeichert. Diese Hinterlegung erfolgt in einem möglichst kurzen Zeitfenster nach Abschluss eines zuvor abgewickelten Ladevorganges LVn 1 und vor Beginn eines weiteren, nachfolgenden Ladevorganges LVn. Weiters ist die Ladeanschlussvorrichtung 1 dazu eingerichtet, einen beabsichtigten Ladevorgang LVn zum Beziehen von elektrischer Energie an der Ladeanschlussvorrichtung 1 zu erkennen. Hierfür ist in der Regel eine Anforderung von Seiten eines Benutzers der Ladeanschlussvorrichtung 1 zu detektieren. Dies kann üblicherweise durch Interaktion mit einem Eingabemittel der Ladeanschlussvorrichtung 1 und/oder durch Nutzung der Identifikationsvorrichtung 34 (Fig. 2), welche auch als Autorisierungsmittel fungieren kann, bewerkstelligt werden.

Daraufhin wird ein diesbezügliches Geschäftsfall-Datenpaket G DPn zumindest temporär in der Ladeanschlussvorrichtung 1 gespeichert. Ein solches Geschäftsfall-Datenpaket G DPn umfasst zumindest eine der Informationen enthaltend eine Ladevorgang-Kennung, eine Benutzer-Identifikation, eine Fahrzeug-Identifikation, ein Datum, eine Uhrzeit, eine Ladeanschlussvorrichtung-Identifikation und eine Energiemessvorrichtung-Identifikation. Nachfolgend wird der entsprechende Ladevorganges LVn ausgeführt und erfolgt dabei mittels der Energiemessvorrichtung 18 ein Messen und Zählen des Energiebezuges während dieses Ladevorganges LVn bis zu einem Ladevorgang-Endzeitpunkt LVe. Dieser Ladevorgang-Endzeitpunkt LVe kann vom Benutzer und/oder vom zu ladenden Elektrofahrzeug beeinflusst sein. Zu diesem Ladevorgang-Endzeitpunkt LVe wird dann ein Energiezähler-Summenwert Xn+1 der Energiemessvorrichtung 18 erfasst bzw. von der Ladeanschlussvorrichtung 1 festgehalten, insbesondere datentechnisch "eingefroren".

Nachfolgend wird ein kombiniertes Ladevorgang-Datenpaket LV DPn erstellt, welches zumindest eine der Informationen aus dem genannten Geschäftsfall-Datenpaket G DPn entweder kombiniert mit dem Energiezähler-Endwert Xn und dem Energiezähler-Summenwert Xn+1 oder kombiniert mit einem Differenzwert aus dem Energiezähler-Summenwert Xn+1 und dem Energiezähler-Endwert Xn enthält. Des Weiteren wird nach Beendigung des Ladevorganges LVn zumindest dieses kombinierte Ladevorgang-Datenpaket LV DPn digital signiert und an das zentrale Verwaltungssystem 37, insbesondere an die Abrechnungszentrale 42 übermittelt.

Vorzugsweise erfolgen solche Übermittlungen von Ladevorgang-Datenpaketen LV DPn unmittelbar, insbesondere innerhalb von 5 Minuten, vorzugsweise innerhalb von einer Minute, besonders bevorzugt innerhalb von weniger als 10 Sekunden nach Abschluss des Ladevorganges LVn mittels einer aufrechten datentechnischen Kommunikationsverbindung 41 an das zentrale Verwaltungssystem 37. Dadurch werden Kontrollaufgaben und Prüfroutinen erleichtert. Der vorstehend beschriebene Ablauf wiederholt sich für eine Mehrzahl von aufeinanderfolgenden Ladevorgängen, welche von unterschiedlichen Benutzern in Anspruch genommen werden können. Der Energiezähler-Summenwert Xn+1 entspricht dabei dann dem Anfangswert für einen nachfolgenden Ladevorgang, insbesondere dem persistierten Energiezähler-Endwert Xn.

Bei einer temporär fehlenden, datentechnischen Kommunikationsverbindung 41 zum zentralen Verwaltungssystem 37 kann auch eine Zwischenspeicherung des Ladevorgang-Datenpakets LV DPn in der Ladeanschlussvorrichtung 1 erfolgen. Die Übermittlung des Ladevorgang-Datenpakets LV DPn kann dann beim Vorliegen einer datentechnischen Kommunikationsverbindung 41 gemeinsam mit weiteren Ladevorgang-Datenpaketen LV DP anderer Ladevorgänge LV an das zentrale Verwaltungssystem 37 erfolgen.

Der Schritt des Erstellens eines kombinierten Ladevorgang-Datenpakets LV DPn kann auch eine Zusammenführung mehrerer Ladevorgang-Datenpakete LV DP von mehreren Ladevorgängen LV zu einem kumulierten Ladevorgang-Datenpaket LV DPk umfassen, und der Schritt des Signierens die Anwendung einer Hashfunktion über dieses kumulierte Ladevorgang-Datenpaket LV DPk umfassen.

Entsprechend einer anderen Ausführungsform wird ein kumuliertes Übermitteln mehrerer, einzeln signierter Ladevorgang-Datenpakete LV DP von mehreren Ladevorgängen LV an das zentrale Verwaltungssystem 37 vorgenommen, sobald eine Kommunikationsverbindung 41 mit dem zentralen Verwaltungssystem 37 besteht bzw. aufgebaut werden konnte.

Gemäß einer vorteilhaften Maßnahme kann vorgesehen sein, dass die Übermittlung von Ladevorgang-Datenpaketen LV DP periodisch zu vorgegebenen Zeitpunkten, beispielsweise tagezeitenabhängig, und/oder auf Anforderung von Seiten des zentralen Verwaltungssystems 37 ausgeführt wird.

Um das Risiko von manipulatorischen oder technisch bedingten Veränderungen hintan zu halten, kann es zweckmäßig sein, wenn die Übermittlung der signierten Ladevorgang-Datenpakete LV DP ausgehend von der Ladeanschlussvorrichtung 1 direkt an das zentrale Verwaltungssystem 37 erfolgt. Zudem kann eine Generierung eineindeutiger Ladevorgang-Kennungen je Ladevorgang LV von der Ladeanschlussvorrichtung 1 vorgesehen sein.

Wie aus einer Zusammenschau mit Fig. 4 verdeutlicht wird, kann auch vorgesehen sein, dass die Ladeanschlussvorrichtung 1 zum Empfangen eines jeweils aktuellen Energietarifes oder einer tageszeitbezogenen Energietarif-Tabelle 43 - hier dargestellt als Diagramm - eingerichtet ist. Ein solcher Energietarif oder eine solche Energietarif-Tabelle 43 wird bevorzugt ausgehend vom zentralen Verwaltungssystem 37 an wenigstes eine der mit dem Verwaltungssystem 37 datentechnisch vernetzten Ladeanschlussvorrichtungen 1 übermittelt. Hierfür wird ebenso die wenigstens eine datentechnische Kommunikationsverbindung 41 genutzt. Vorzugsweise wird der aktuelle Energietarif oder die tageszeitbezogenen Energietarif-Tabelle 43 in der datentechnisch abgesicherten Energiedaten-Speichervorrichtung 24 der Ladeanschlussvorrichtung 1 hinterlegt. Dadurch sind diese Tarife vor betrügerischen Manipulationen gut geschützt.

Die Ladeanschlussvorrichtung 1 kann auch dazu eingerichtet sein, eine Zuweisung von sich fortlaufend erhöhenden Energiezähler-Messwerten X1 bis Xn zu einer Reihe von Zeitpunkten 44 gemäß der Energietarif-Tabelle 42 vorzunehmen und diese tarifabhängigen Zuweisungen zumindest temporär in der Ladeanschlussvorrichtung 1, vorzugsweise in der Energiedaten-Speichervorrichtung 24, abzuspeichern. Nachfolgend können die entsprechenden Daten in einem vorzugsweise signierten Ladevorgang-Datenpaket LV-DP an das zentrale Verwaltungssystem 37 übertragen werden.

Des Weiteren kann die Ladeanschlussvorrichtung 1 dazu eingerichtet sein, die innerhalb der jeweiligen Zeitspannen bzw. Zeitpunkte 44 jeweils erfassten Energiezähler-Messwerte mit den zu den jeweiligen Zeitspannen jeweils geltenden Energietarifen 44 oder den tageszeitbezogenen Werten der Energietarif-Tabelle 43 rechnerisch zu multiplizieren. Das mit dem wenigstens einen Multiplikationsprodukt inhaltlich entsprechend erweiterte Ladevorgang-Datenpaket LV-DP kann dann an das zentrale Verwaltungssystem 37 übermittelt werden, wobei es vorzugsweise im Vorfeld datentechnisch signiert wird.

Schreibzugriffe oder Schreibrechte gegenüber der Energiedaten-Speichervorrichtung 24 sind bevorzugt auf die Energiemessvorrichtung 18 (Fig. 2) begrenzt. Demgegenüber können Lesezugriffe oder Leserechte gegenüber der Energiedaten-Speichervorrichtung 24 auch für die Steuervorrichtung 16 der Ladeanschlussvorrichtung 1 und/oder für das zentrale Verwaltungssystem 37 erteilt sein.

Bei der datentechnisch abgesicherten Energiedaten-Speichervorrichtung 24 kann es sich um einen digitalen Speicher handeln, welcher von einem proprietär entwickelten, zertifizierten Betriebssystem überwacht wird. Dieses Betriebssystem, auf dessen Laufzeitsystem auch die Mess- und Auswertungssoftware 32, 32` der zertifizierten Energiemessvorrichtung 18 läuft, lässt nur Schreibzugriffe durch die zertifizierte Mess- und Auswertungssoftware 32, 32` der Energiemessvorrichtung 18 zu. Somit haben nur auf dem Betriebssystem laufende Software-Applikation überhaupt keinen Schreibzugriff. Von extern bzw. außerhalb der Energiemessvorrichtung 18 können nur Daten aus dieser Energiedaten-Speichervorrichtung 24 angefragt werden. Kommt eine solche Anfrage, so wird diese von einer Software-Applikation des Betriebssystems angenommen, die jeweiligen Daten werden nur unter Lesezugriff von der Energiedaten-Speichervorrichtung 24 gelesen, anschließend signiert, und dieses signierte Datenpaket an die externe, anfordernde Stelle weitergeleitet.

Zudem kann vorgesehen sein, dass ein Standard-User durch eine Implementierung eines Rechtesystems in der Ladeanschlussvorrichtung 1 kein Softwareupdate im Bereich der Energiemessvorrichtung 18, insbesondere betreffend die genannte Mess- und Auswertungssoftware 32, 32' ausführen kann. Beispielsweise kann die zuvor genannte Schnittstelle 28 zwischen der Energiemessvorrichtung 18 und der funktionalen Steuervorrichtung 16 sowohl hardware- als auch softwaretechnisch proprietär umgesetzt sein. Diese Schnittstelle 28 ist dabei die einzige Möglichkeit, die Mess- und Auswertungssoftware 32, 32' und/oder die Inhalte der Energiedaten-Speichervorrichtung 24 zu verändern. Softwaretechnisch kann ebenfalls die Kommunikation rein auf Anfragen von Extern eingeschränkt sein. Alle anderen Befehle von Extern werden ignoriert. Auch durch wirre Abfragen kann kein Fehlerstatus im zertifizierten Bereich der Energiemessvorrichtung 18 erzeugt werden.

Zweckmäßig kann es auch sein, wenn zumindest die fortlaufenden Energiezähler-Summenwerte Xn+1 bzw. die Energiezähler-Endwerte Xn als datentechnisch unsignierte Rohdaten in der Energiedaten-Speichervorrichtung 24 abgespeichert werden. Dadurch kann in der Energiedaten-Speichervorrichtung 24 bedeutsamer Speicherplatz eingespart werden.

Als Alternative oder als Zusatzausführung kann auch vorgesehen sein, dass der Schritt des Speicherns des letztgültigen Energiezähler-Endwertes Xn das Abspeichern von Null umfasst und von der Energiemessvorrichtung 18 die während eines Ladevorganges LV von einem Elektrofahrzeug bezogene elektrische Energie ausgehend von Null gezählt und aufsummiert wird. Damit kann in primär softwaretechnischer Weise, und somit in relativ einfacher Art und Weise, für jeden Ladevorgang LV ein gesonderter Ladevorgang-Zähler geschaffen werden.

Das Ausführungsbeispiel zeigt mögliche Ausführungsvarianten, wobei an dieser Stelle bemerkt sei, dass die Erfindung nicht auf die speziell dargestellten Ausführungsvarianten eingeschränkt ist und nicht alle der dargestellten Ausführungsvarianten umfassen muss. Zudem sind diverse Kombinationen der einzelnen Ausführungsvarianten untereinander möglich sind und liegt diese Variationsmöglichkeit aufgrund der Lehre zum technischen Handeln durch gegenständliche Erfindung im Können des auf diesem technischen Gebiet tätigen Fachmannes.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Ladeanschlussvorrichtung | 29 | Freigabe- und/oder Sperrsignal |
| 2 | Gehäuse | 30 | Steuerleitung |
| 3 | vorderes Gehäuseteil | 31 | Leistungsschalter-Ansteuerein-heit |
| 4 | hinteres Gehäuseteil | | |
| 5 | weitere Gehäuseteile | 31 ` | Steuerleitung |
| 6 | erste Schnittstelle | 32, 32` | Mess- und Auswertungssoftware |
| 7 | zweite Schnittstelle | 33 | Betriebssoftware |
| 8 | Steckbuchse | 34 | Identifikationsvorrichtung |
| 9 | zweite Schnittstelle | 35 | Bussystem |
| 10 | Ladekabelabgang | 36 | datentechnische Kennung |
| 11 | Ladekabelhalterung | 37 | zentrales Verwaltungssystem |
| 12 | Leiterplatte | 38 | Internet |
| 13 | Anschlussklemmen | 39 | Kommunikationsbaugruppe |
| 14 | Leistungsschaltvorrichtung | 40 | Kommunikationsschnittstelle |
| 15 | Fehlerstrom-Überwachungsvor- richtung | 41 | Kommunikationsverbindung |
| | | 42 | Abrechnungszentrale |
| 16 | Steuervorrichtung | 43 | Energietarif-Tabelle |
| 17 | erster Mikrocontroller | 44 | Zeitpunkte |
| 18 | Energiemessvorrichtung | 45 | Energietarif |
| 19 | Spannungsgeber | | |
| 20 | Stromwandler | Xn | Energiezähler-Endwert |
| 21 | Mess-Controller | LV | Ladevorgang |
| 22 | Kalibrierdaten-Speichervorrich- tung | G-DP | Geschäftsfall-Datenpaket |
| | | LVe | Ladevorgang-Endzeitpunkt |
| 23 | Hauptplatine | Xn+1 | Energiezähler-Summenwert |
| 24 | Energiedaten-Speichervorrichtung | LV-DP | Ladevorgang-Datenpaket |
| 25 | Messdaten-Verwaltungscontroller | | |
| 26 | Display | | |
| 27 | Messplatine | | |
| 28 | Steckerschnittstelle | | |

## Patentansprüche

1. Verfahren zum Betreiben einer Ladeanschlussvorrichtung (1) für Elektrofahrzeuge, welche Ladeanschlussvorrichtung (1) eine in die Ladeanschlussvorrichtung baulich integrierte Energiemessvorrichtung (18) aufweist, welche Energiemessvorrichtung (18) zum Messen und Zählen der während Ladevorgängen (LV) von Elektrofahrzeugen bezogenen elektrischen Energie ausgebildet ist, umfassend die Schritte:
- Speichern eines letztgültigen Energiezähler-Endwertes (Xn) der Energiemessvorrichtung (18) in einer datentechnisch abgesicherten Energiedaten-Speichervorrichtung (24) in der Ladeanschlussvorrichtung (1), insbesondere innerhalb der Energiemessvorrichtung (18), in einem Zeitfenster nach Abschluss eines Ladevorganges (LVn-1) und vor Beginn eines weiteren, nachfolgenden Ladevorganges (LVn);
- Detektieren eines beabsichtigten Ladevorgangs (LVn) zum Beziehen von elektrischer Energie an der Ladeanschlussvorrichtung (1);
- Speichern eines Geschäftsfall-Datenpakets (G-DPn) in der Ladeanschlussvorrichtung (1), umfassend zumindest eine der Informationen enthaltend eine Ladevorgang-Kennung, eine Benutzer-Identifikation, eine Fahrzeug-Identifikation, ein Datum, eine Uhrzeit, eine Ladeanschlussvorrichtung-Identifikation und eine Energiemessvorrichtung-Identifikation;
- Ausführen des Ladevorganges (LVn) und Messen und Zählen des Energiebezuges während des Ladevorganges (LVn) mittels der Energiemessvorrichtung (18) bis zu einem Ladevorgang-Endzeitpunkt (LVe);
- Erfassen eines Energiezähler-Summenwertes (Xn+1) der Energiemessvorrichtung (18) zu dem Ladevorgang-Endzeitpunkt (LVe);
- Erstellen eines kombinierten Ladevorgang-Datenpakets (LV-DPn) enthaltend zumindest eine der Informationen aus dem genannten Geschäftsfall-Datenpaket (G-DPn) (i) kombiniert mit dem Energiezähler-Endwert (Xn) und dem Energiezähler-Summenwert (Xn+1) oder (ii) kombiniert mit einem Differenzwert aus dem Energiezähler-Summenwert (Xn+1) und dem Energiezähler-Endwert (Xn);
- digitales Signieren und Übermitteln zumindest dieses kombinierten Ladevorgang-Datenpakets (LV-DPn) nach Beendigung des Ladevorganges (LVn) an ein zentrales Verwaltungssystem (37), insbesondere an eine Abrechnungszentrale (42),
wobei der Schritt des Erstellens eines kombinierten Ladevorgang-Datenpakets (LV-DPn) eine Zusammenführung mehrerer Ladevorgang-Datenpakete (LV-DP) von mehreren Ladevorgängen (LV) zu einem kumulierten Ladevorgang-Datenpaket (LV-DPk) umfasst, und der Schritt des Signierens die Anwendung einer Hashfunktion über dieses kumulierte Ladevorgang-Datenpaket (LV-DPk) umfasst.

2. Verfahren nach einem der vorhergehenden Ansprüchen, wobei die Übermittlung von Ladevorgang-Datenpaketen (LV-DP) periodisch zu vorgegebenen Zeitpunkten, beispielsweise tagezeitenabhängig, und/oder auf Anforderung von Seiten des zentralen Verwaltungssystems (37) ausgeführt wird.

3. Verfahren nach einem der vorhergehenden Ansprüche, **gekennzeichnet durch** Generieren eineindeutiger Ladevorgang-Kennungen je Ladevorgang (LV) von der Ladeanschlussvorrichtung (1).

4. Verfahren nach einem der vorhergehenden Ansprüche, **gekennzeichnet durch** Empfangen eines jeweils aktuellen Energietarifes (45) oder einer tageszeitbezogenen Energietarif-Tabelle (43) ausgehend vom zentralen Verwaltungssystem (37) in der Ladeanschlussvorrichtung (1).

5. Verfahren nach Anspruch 4, **gekennzeichnet durch** Hinterlegen des aktuellen Energietarifes (45) oder der tageszeitbezogenen Energietarif-Tabelle (43) in der datentechnisch abgesicherten Energiedaten-Speichervorrichtung (24) der Ladeanschlussvorrichtung (1).

6. Verfahren nach Anspruch 4 oder 5, **gekennzeichnet durch** Zuweisen von sich fortlaufend erhöhenden Energiezähler-Messwerten zu Zeitpunkten (44) gemäß der Energietarif-Tabelle (43) in der Ladeanschlussvorrichtung (1) und Abspeichern dieser Zuweisungen vorzugsweise in der Energiedaten-Speichervorrichtung (24).

7. Verfahren nach einem der Ansprüche 4 bis 6, **gekennzeichnet durch** rechnerisches Multiplizieren von Energiezähler-Messwerten mit dem aktuellen Energietarif (45) oder den tageszeitbezogenen Werten der Energietarif-Tabelle (43) und Übermitteln des Ladevorgang-Datenpakets (LV-DPn) mit dem wenigstens einen Multiplikationsprodukt an das zentrale Verwaltungssystem (37).

8. Verfahren nach einem der vorhergehenden Ansprüche, wobei Schreibzugriffe oder Schreibrechte gegenüber der Energiedaten-Speichervorrichtung (24) exklusiv für die Energiemessvorrichtung (18) festgelegt sind und Lesezugriffe oder Leserechte gegenüber der Energiedaten-Speichervorrichtung (24) auch für eine Steuervorrichtung (16) der Ladeanschlussvorrichtung (1) und/oder für das zentrale Verwaltungssystem (37) erteilt sind.

9. Verfahren nach einem der vorhergehenden Ansprüche, wobei zumindest die Energiezähler-Summenwerte (Xn+1) und/oder die Energiezähler-Endwerte (Xn) als datentechnisch unsignierte Rohdaten in der Energiedaten-Speichervorrichtung (24) abgespeichert werden.

10. Verfahren nach einem der vorhergehenden Ansprüche, wobei der Schritt des Speicherns des letztgültigen Energiezähler-Endwertes (Xn) das Abspeichern von Null umfasst und von der Energiemessvorrichtung (18) die während eines Ladevorganges (LV) von einem Elektrofahrzeug bezogene elektrische Energie ausgehend von Null gezählt und aufsummiert wird.

11. Ladesystem für Elektrofahrzeuge, umfassend eine Mehrzahl von örtlich verteilt angeordneten Ladeanschlussvorrichtungen (1) und ein mit diesen Ladeanschlussvorrichtungen (1) datentechnisch verbundenes, zentrales Verwaltungssystem (37), wobei die Ladeanschlussvorrichtungen (1) und das zentrale Verwaltungssystem (37) dazu eingerichtet sind, das Verfahren gemäß den vorhergehenden Ansprüchen auszuführen.

## Claims

1. A method for operating a charging connection device (1) for electric vehicles, which charging connection device (1) has an energy measuring device (18) structurally integrated into the charging connection device, which energy measuring device (18) is configured for measuring and counting the electrical energy drawn during charging processes (LV) of electric vehicles, comprising the steps of:
- storing a final valid energy meter end value (Xn) of the energy measuring device (18) in a data-protected energy data storage device (24) in the charging connection device (1), in particular within the energy measuring device (18), in a time window after completion of a charging process (LVn-1) and before the start of a further, subsequent charging process (LVn);
- detecting an intended charging process (LVn) for drawing electrical energy at the charging connection device (1);
- storing a business case data packet (G-DPn) in the charging connection device (1), comprising at least one piece of the information including a charging process identifier, a user identifier, a vehicle identifier, a date, a time, a charging connection device identifier and an energy measuring device identifier;
- executing the charging process (LVn) and measuring and counting the energy consumption during the charging process (LVn) by means of the energy measuring device (18) up to a charging process end time (LVe);
- detecting an energy meter sum value (Xn+1) of the energy measuring device (18) at the charging process end time (LVe);
- generating a combined charging process data packet (LV-DPn) comprising at least one piece of the information from said business case data packet (G-DPn) (i) combined with the energy meter end value (Xn) and the energy meter sum value (Xn+1) or (ii) combined with a difference value of the energy meter sum value (Xn+1) and the energy meter end value (Xn);
- digitally signing and transmitting at least this combined charging process data packet (LV-DPn) after completion of the charging process (LVn) to a central management system (37), in particular to a billing center (42),
wherein the step of creating a combined charging process data packet (LV-DPn) comprises merging a plurality of charging process data packets (LV-DP) from a plurality of charging processes (LV) into a cumulative charging process data packet (LV-DPk), and the step of signing comprises applying a hash function over this cumulative charging process data packet (LV-DPk).

2. The method according to one of the preceding claims, wherein the transmission of charging process data packets (LV DP) is carried out periodically at predetermined times, for example depending on the time of day, and/or on request from the central management system (37).

3. The method according to one of the preceding claims, **characterized by** generating unique charging process identifiers per charging process (LV) of the charging connection device (1).

4. The method according to one of the preceding claims, **characterized by** receiving a respectively current energy tariff (45) or a time-of-day-related energy tariff table (43) starting from the central management system (37) in the charging connection device (1).

5. The method according to claim 4, **characterized by** storing the current energy tariff (45) or the time-of-day-related energy tariff table (43) in the data-secured energy data storage device (24) of the charging connection device (1).

6. The method according to claim 4 or 5, **characterized by** assigning continuously increasing energy meter measuring values at times (44) according to the energy tariff table (43) in the charging connection device (1) and storing these assignments preferably in the energy data storage device (24).

7. The method according to any one of claims 4 to 6, **characterized by** computationally multiplying energy meter measuring values by the current energy tariff (45) or the time-of-day-related values of the energy tariff table (43) and transmitting the charging data packet (LV DPn) with the at least one multiplication product to the central management system (37).

8. The method according to one of the preceding claims, wherein write accesses or write rights to the energy data storage device (24) are defined exclusively for the energy measuring device (18) and read accesses or read rights to the energy data storage device (24) are also granted for a control device (16) of the charging connection device (1) and/or for the central management system (37).

9. The method according to one of the preceding claims, wherein at least the energy meter sum values (Xn+1) and/or the energy meter end values (Xn) are stored as data-technically unsigned raw data in the energy data storage device (24).

10. The method according to one of the preceding claims, wherein the step of storing the last valid energy meter end value (Xn) comprises storing zero and the electrical energy drawn by an electric vehicle during a charging process (LV) is counted and totaled starting from zero by the energy measuring device (18).

11. A charging system for electric vehicles, comprising a plurality of locally distributed charging connection devices (1) and a central management system (37) connected by data technology to these charging connection devices (1), wherein the charging connection devices (1) and the central management system (37) are configured to carry out the method according to the preceding claims.

## Revendications

1. Procédé de fonctionnement d'un dispositif à connecteur de charge (1) pour des véhicules électriques, ce dispositif à connecteur de charge (1) comprenant un dispositif de mesure d'énergie (18) intégré dans le dispositif à connecteur de charge, ce dispositif de mesure d'énergie (18) étant conçu pour la mesure et le comptage de l'énergie électrique consommée pendant les processus de charge (LV) des véhicules électriques, comprenant les étapes suivantes :
- enregistrement d'une dernière valeur finale de comptage d'énergie (Xn) valide du dispositif de mesure d'énergie (18) dans un dispositif d'enregistrement de données énergétiques (24) sécurisé sur le plan des données dans le dispositif à connecteur de charge (1), plus particulièrement à l'intérieur du dispositif de mesure d'énergie (18), dans une fenêtre de temps après la fin d'un processus de charge (LVn-1) et avant la fin d'un autre processus de charge (LVn) suivant ;
- détection d'un processus de charge (LVn) prévu pour l'approvisionnement en énergie électrique du dispositif à connecteur de charge (1) ;
- enregistrement d'un paquet de données de transaction (G-DPn) dans le dispositif à connecteur de charge (1), comprenant au moins une information contenant un identifiant de processus de charge, une identification d'utilisateur, une identification de véhicule, une date, une heure, une identification de dispositif à connecteur de charge et une identification de dispositif de mesure d'énergie ;
- exécution du processus de charge (LVn) et mesure et comptage de la consommation d'énergie pendant le processus de charge (LVn) au moyen du dispositif de mesure d'énergie (18) jusqu'à un instant finale de processus de charge (LVe) ;
- relevé d'une valeur de somme de comptage d'énergie (Xn+1) du dispositif de mesure d'énergie (18) à l'instant final du processus de charge (LVe) ;
- création d'un paquet de données de processus de charge combiné (LV-DPn) contenant au moins une des informations parmi le paquet de données de transaction (G-DPn) mentionné (i) combiné avec la valeur finale de comptage d'énergie (Xn) et la valeur de somme de comptage d'énergie (Xn+1) ou (ii) combiné avec une valeur de différence entre la valeur de somme de comptage d'énergie (Xn+1) et la valeur finale de comptage d'énergie (Xn) ;
- signature numérique et transmission d'au moins ce paquet de données de processus de charge combiné (LV-DPn), après la fin du processus de charge (LVn) à un système de gestion central (37), plus particulièrement à une centrale de facturation (42),
dans lequel l'étape de création d'un paquet de données de processus de charge combiné (LV-DPn) comprend un regroupement de plusieurs paquets de données de processus de charge (LV-DP) de plusieurs processus de charge (LV) en un paquet de données de processus de charge cumulé (LV-DPk) et l'étape de signature comprend l'application d'une fonction de hachage à ce paquet de données de processus de charge cumulé (LV-DPk).

2. Procédé selon l'une des revendications précédentes, dans lequel la transmission des paquets de données de processus de charge (LV-DP) est effectuée périodiquement à des moments prédéterminés, par exemple en fonction des heures de la journée, et/ou sur demande de la part du système de gestion central (37).

3. Procédé selon l'une des revendications précédentes, **caractérisé par** la génération d'un identifiant de processus de charge unique pour chaque processus de charge (LV) par le dispositif à connecteur de charge (1).

4. Procédé selon l'une des revendications précédentes, **caractérisé par** la réception d'un tarif d'énergie actuel (45) ou d'une table de tarifs d'énergie horaires (43), provenant du système de gestion central (37) dans le dispositif à connecteur de charge (1).

5. Procédé selon la revendication 4, **caractérisé par** l'enregistrement du tarif d'énergie actuel (45) ou de la table de tarifs d'énergie horaires (43) dans le dispositif d'enregistrement de données énergétiques sécurisé sur le plan informatique (24) du dispositif à connecteur de charge (1).

6. Procédé selon la revendication 4 ou 5, **caractérisé par** l'attribution de valeurs de mesure de comptage d'énergie augmentant continuellement à des moments (44) selon la table de tarifs d'énergie horaires (43) dans le dispositif à connecteur de charge (1) et enregistrement de ces attributions de préférence dans le dispositif d'enregistrement des données énergétiques (24).

7. Procédé selon l'une des revendications 4 à 6, **caractérisé par** la multiplication des valeurs de mesure de comptage d'énergie par le tarif d'énergie actuel (45) ou les valeurs horaires de la table de tarifs d'énergie (43) et transmission du paquet de données de processus de charge (LV-DPn) avec l'au moins un produit de multiplication au système de gestion central (37).

8. Procédé selon l'une des revendications précédentes, dans lequel des accès en écriture ou des droits d'écriture vis-à-vis du dispositif d'enregistrement de données énergétiques (24) sont définis exclusivement pour le dispositif de mesure d'énergie (18) et des accès en lecture ou des droits de lecture vis-à-vis du dispositif d'enregistrement de données énergétiques (24) sont accordés également pour un dispositif de commande (16) du dispositif à connecteur de charge (1) et/ou pour le système de gestion central (37).

9. Procédé selon l'une des revendications précédentes, dans lequel au moins les valeurs de somme de comptage d'énergie (Xn+1) et/ou les valeurs finales de comptage d'énergie (Xn) sont enregistrées comme des données brutes non signées informatiquement dans le dispositif d'enregistrement de données énergétiques (24).

10. Procédé selon l'une des revendications précédentes, dans lequel l'étape d'enregistrement de la dernière valeur finale de comptage d'énergie (Xn) valide comprend l'enregistrement à partir de zéro et le dispositif de mesure d'énergie (18) compte et additionne l'énergie électrique consommée par un véhicule électricité pendant le process de charge (LV) en partant de zéro.

11. Système de charge pour des véhicules électriques, comprenant une pluralité de dispositifs à connecteurs de charge (1) répartis localement et un système de gestion central (37), relié informatiquement avec ces dispositifs à connecteurs de charge (1), dans lequel les dispositifs à connecteurs de charge (1) et le système de gestion central (37) sont conçus pour exécuter le procédé selon l'une des revendications précédentes.
